# EUROPEAN PATENT APPLICATION

(11) **EP 4 539 162 A1**
(43) Date of publication of application: **16.04.2025**
(21) Application number: 23819566.3
(22) Date of filing: 09.05.2023
(51) Int. Cl.: H01M 4/525, H01M 4/36, H01M 4/62

(54) **COATED ACTIVE MATERIAL, ELECTRODE MATERIAL, AND BATTERY**

(30) Priority: 10.06.2022 JP 2022094646
(71) Applicant: Panasonic Holdings Corporation, Osaka, 571-8501 (JP); TOYOTA JIDOSHA KABUSHIKI KAISHA, Toyota-shi Aichi 471-8571 (JP)
(72) Inventor: NAGAMINE, Kenta, Kadoma-shi, Osaka 571-0057 (JP); HASHIMOTO, Kazuya, Kadoma-shi, Osaka 571-0057 (JP); SUGIMOTO, Yuta, Kadoma-shi, Osaka 571-0057 (JP)
(74) Representative: Eisenführ Speiser
(86) International application number: PCT/JP2023/017474
(87) International publication number: WO 2023/238582

(57) **Abstract**

A coated active material 130 of the present disclosure includes: an active material 110; and a coating layer 111 including a first solid electrolyte and coating at least a portion of a surface of the active material 110, wherein the first solid electrolyte includes a fluoride, and a ratio of a total pore volume of the coated active material 130 to a total pore volume of the active material 110 is 1.2 or more and less than 7.2. An electrode material 1000 of the present disclosure includes the coated active material 130 and a second solid electrolyte. A battery 2000 of the present disclosure includes: a positive electrode 201 including the electrode material 1000; a negative electrode 203; and an electrolyte layer 202 disposed between the positive electrode 201 and the negative electrode 203.

## Description

### TECHNICAL FIELD

The present disclosure relates to a coated active material, an electrode material, and a battery.

### BACKGROUND ART

Non Patent Literature 1 discloses a battery including a sulfide as a solid electrolyte.

### CITATION LIST

### Non Patent Literature

Non Patent Literature 1: Journal of Power Sources 159 (2006), pp. 193-199

### SUMMARY OF INVENTION

### Technical Problem

Conventional techniques are required to reduce the resistance of a battery.

### Solution to Problem

The present disclosure provides a coated active material including:
an active material; and
a coating layer including a first solid electrolyte and coating at least a portion of a surface of the active material, wherein
the first solid electrolyte includes a fluoride, and
a ratio of a total pore volume of the coated active material to a total pore volume of the active material is 1.2 or more and less than 7.2.

### Advantageous Effects of Invention

According to the present disclosure, the resistance of a battery can be reduced.

### BRIEF DESCRIPTION OF DRAWINGS

FIG. 1 is a cross-sectional view schematically showing a configuration of a coated active material of Embodiment 1.
FIG. 2 is a cross-sectional view schematically showing a configuration of a coated active material of a modification.
FIG. 3 is a cross-sectional view schematically showing a configuration of an electrode material of Embodiment 2.
FIG. 4 is a cross-sectional view schematically showing a configuration of a battery of Embodiment 3.
FIG. 5 is a graph showing a relation between a DC resistance and a total pore volume ratio.
FIG. 6 is a graph showing a relation between a resistance increase rate and a total pore volume ratio.
FIG. 7 is a SEM image of a coated active material of Example 6.

### DESCRIPTION OF EMBODIMENTS

### (Findings on which the present disclosure is based)

For example, in the case that an active material and a solid electrolyte are in contact with each other, oxidative decomposition of the solid electrolyte can occur during charging of a battery. This tendency is notable when the solid electrolyte is one having a poor oxidation resistance, such as a sulfide solid electrolyte. To solve this disadvantage, a surface of the active material is coated with a coating material, such as a halide solid electrolyte, having a high oxidation resistance.

The present inventors noticed that even when including coating materials having the same composition, batteries have different properties, especially different resistances. Furthermore, the present inventors found a correlation between a total pore volume and properties of a battery, and have conceived the present disclosure.

### (Summary of one aspect according to the present disclosure)

A coated active material according to a first aspect of the present disclosure includes:
an active material; and
a coating layer including a first solid electrolyte and coating at least a portion of a surface of the active material, wherein
the first solid electrolyte includes a fluoride, and
a ratio of a total pore volume of the coated active material to a total pore volume of the active material is 1.2 or more and less than 7.2.

According to the present disclosure, the resistance of a battery can be reduced.

A coated active material according to a second aspect of the present disclosure includes:
an active material; and
a coating layer including a first solid electrolyte and coating at least a portion of a surface of the active material, wherein
the first solid electrolyte includes a fluoride,
a total pore volume of the coated active material is 0.001 cm³/g or more and less than 0.014 cm³/g, and
a median size of the coated active material is 3.5 µm or more and 5.5 µm or less.

According to the present disclosure, the resistance of a battery can be reduced.

According to a third aspect of the present disclosure, for example, in the coated active material according to the first or second aspect, the coating layer may have a particle-like structure including a plurality of particles having a diameter of 500 nm or less. Such a fine particle-like structure of the coating layer facilitates deformation of the coating layer at the time of manufacturing an electrode plate, and thus a favorable interface can be formed between the coated active material and another material. Consequently, the resistance of a battery can further be reduced.

According to a fourth aspect of the present disclosure, for example, in the coated active material according to any one of the first to third aspects, the coating layer may have a plurality of voids having a diameter of 50 nm or less. Such fine voids of the coating layer facilitate deformation of the coating layer at the time of manufacturing an electrode plate, and thus a favorable interface can be formed between the coated active material and another material. Consequently, the resistance of a battery can further be reduced.

According to a fifth aspect of the present disclosure, for example, in the coated active material according to any one of the first to fourth aspects, a mass of the coating layer may be 4.5% or less of a mass of the coated active material. This configuration can further reduce the resistance of a battery.

According to a sixth aspect of the present disclosure, for example, in the coated active material according to any one of the first to fifth aspects, the active material may be a positive electrode active material. Applying the technique of the present disclosure to a positive electrode active material makes it possible for a positive electrode to include a solid electrolyte poor in oxidation resistance but high in ionic conductivity.

According to a seventh aspect of the present disclosure, for example, in the coated active material according to any one of the first to sixth aspects, the first solid electrolyte may be represented by the following composition formula (2). The symbol x satisfies 0 < x ≤ 1.2, M is a metal or a metalloid, n is a weighted average valence of an element or elements included in the M, and X includes fluorine or includes fluorine and chlorine. A battery including the halide solid electrolyte represented by the composition formula (2) can have improved charge and discharge efficiency.

Li₆₋ₙₓMₓX₆ Formula (2)

According to an eighth aspect of the present disclosure, for example, in the coated active material according to the seventh aspect, the M may be at least one selected from the group consisting of Ca, Mg, Al, Y, Ti, and Zr. This configuration can improve the ion conductivity of the coating layer and can reduce the resistance of a battery effectively.

According to a ninth aspect of the present disclosure, for example, in the coated active material according to the seventh aspect, the M may be at least one selected from the group consisting of Al, Ti, and Zr. This configuration can improve the ion conductivity of the coating layer and can reduce the resistance of a battery effectively.

According to a tenth aspect of the present disclosure, for example, in the coated active material according to the seventh aspect, the M may be at least one selected from the group consisting of Ti and Al. When the M includes Al and/or Ti, the halide solid electrolyte has a high ionic conductivity.

According to an eleventh aspect of the present disclosure, for example, in the coated active material according to any one of the seventh to tenth aspects, a ratio of an amount of substance of Li to a total amount of substance of the M may be 1.7 or more and 4.2 or less. This configuration makes it possible to further increase the ionic conductivity of the first solid electrolyte.

An electrode material according to a twelfth aspect of the present disclosure includes:
a coated active material of any one of the first to eleventh aspects; and
a second solid electrolyte.

The electrode material of the present disclosure is suitable for reducing the resistance of a battery.

According to a thirteenth aspect of the present disclosure, for example, in the electrode material according to the twelfth aspect, the second solid electrolyte may include a sulfide solid electrolyte. In the case that a sulfide solid electrolyte is included as the second solid electrolyte in a battery, an increased effect is achieved by applying the technique of the present disclosure.

A battery according to a fourteenth aspect of the present disclosure includes a positive electrode including the electrode material of the twelfth or thirteenth aspect.

A battery according to a fifteenth aspect of the present disclosure includes:
a positive electrode including the electrode material of the twelfth or thirteenth aspect;
a negative electrode; and
an electrolyte layer disposed between the positive electrode and the negative electrode.

According to the present disclosure, the resistance of a battery can be reduced and a battery excellent in durability can be provided.

### (Embodiment 1)

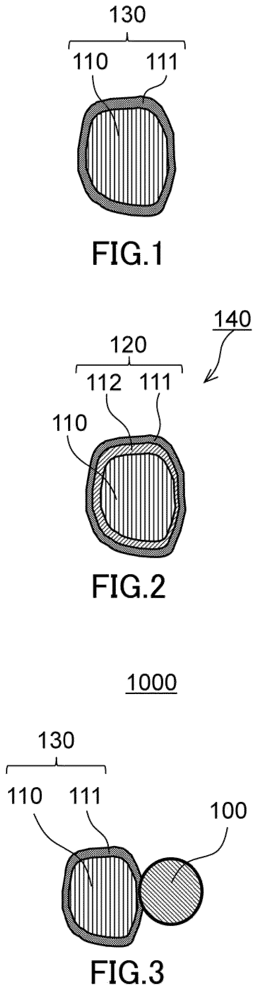

FIG. 1 is a cross-sectional view schematically showing a configuration of a coated active material 130 of Embodiment 1. The coated active material 130 includes an active material 110 and a coating layer 111. The shape of the active material 110 is, for example, the shape of a particle. The coating layer 111 coats at least a portion of a surface of the active material 110.

The coating layer 111 is a layer including the first solid electrolyte. The coating layer 111 is on the surface of the active material 110. The first solid electrolyte includes a fluoride.

The first solid electrolyte can be a halogen-containing solid electrolyte. A halogen-containing solid electrolyte is often called a halide solid electrolyte. A halide solid electrolyte is excellent in oxidation resistance. In particular, a halide solid electrolyte containing fluorine (F) is excellent in oxidation resistance because of the high electronegativity of F. Therefore, by coating the active material 110 with the first solid electrolyte, oxidation of another solid electrolyte in contact with the active material 110 can be suppressed. Consequently, a resistance, particularly an initial resistance, of a battery can be reduced.

A ratio of a total pore volume of the coated active material 130 to a total pore volume of the active material 110 is, for example, less than 7.2. In this case, the resistance of a battery can be reduced. An increase in resistance of a battery in a durability test can also be reduced. The total pore volume ratio may be less than 3.0.

The ratio of the total pore volume of the coated active material 130 to the total pore volume of the active material 110 is, for example, 1.2 or more. In this case, the resistance of a battery can be reduced. An increase in resistance of a battery in a durability test can also be reduced. The total pore volume ratio may be 1.6 or more.

When the ratio of the total pore volume of the coated active material 130 to the total pore volume of the active material 110 is in the above range, the resistance of a battery can be reduced. A large total pore volume ratio indicates that the shape of the particle of the material of the coating layer 111 on the surface of the active material 110 is maintained to form a relatively large pore. Hence, in a densification step followed by mixing of the coated active material 130, a solid electrolyte, and a sub-material (such as a conductive additive) in manufacturing of an electrode plate, densification is achieved by deformation of the coating layer 111 according to the shape and position of each of the materials, so that a favorable interface between the materials can be formed. Since formation of such a favorable interface can reduce delamination and formation of a gap at the interface between the materials, a battery can have a larger reaction area and, consequently, a reduced resistance.

A small total pore volume ratio denotes a state where the particles of the coating material forming the coating layer are compact on the surface of the active material. Therefore, in the case where the total pore volume ratio is too small, the coating layer may be difficult to deform according to another material and delamination may be likely to happen between the materials due to a physical rebound after the densification step. On the other hand, a large total pore volume ratio denotes a state where the particles of the coating material are weakly bonded to each other and are simply attached to the surface of the active material rather than closely adhered thereto. Therefore, in the case where the total pore volume ratio is too large, the coating layer is likely to be delaminated during manufacturing of an electrode plate of a battery and the active material and a solid electrolyte are likely to be brought into direct contact with each other. The resistance of the resulting battery is thought to increase consequently.

For the above reasons, the resistance of a battery can further be reduced when the ratio of the total pore volume ratio of the coated active material 130 to the total pore volume ratio of the active material 110 is in the above range.

The total pore volume (cm³/g) can be measured with a fully automatic adsorbed gas amount measurement apparatus. Specifically, the total pore volume can be determined from the amount of adsorbed gas measured under conditions where the type of adsorbed gas is nitrogen gas and a relative pressure is 0.99. Since the atomic radius of nitrogen is approximately 0.4 nm, nitrogen gas will not be adsorbed on a closed pore. Therefore, in the measurement of the total pore volume, the volume of pores that are called open pores and different from closed pores is measured.

Herein, the total pore volume of the active material 110 refers to a total pore volume of a group of particles of the active material 110. Likewise, the total pore volume of the coated active material 130 refers to a total pore volume of a group of particles of the coated active material 130.

The total pore volume of the active material 110 can be measured by selectively removing the coating layer 111 from the coated active material 130 using an inorganic solvent or an organic solvent. For example, in the case that the first solid electrolyte included in the coating layer 111 is a halide solid electrolyte, the coating layer 111 can be selectively removed by washing the coated active material 130 using a solvent such as water or ethanol.

The resistance of a battery increases through a given durability test. A ratio of a post-durability-test resistance to a pre-durability-test resistance (initial resistance) is referred to as a resistance increase rate (%).

An increase in resistance in a durability test can be measured by the following method. After completion of a battery, charge-discharge processing is carried out. Then, the battery is charged to an appropriate charging voltage approximately between 2 V and 4 V. After that, the battery is discharged at an appropriate rate approximately between 2C to 4C. A difference between an open-circuit voltage immediately before the discharging and a voltage 10 seconds after the start of the discharging was divided by a discharging current value to determine a resistance (initial resistance). The resistance thus determined is the pre-durability-test resistance. Subsequently, the battery is put in a constant-temperature chamber set at 60°C, and a cycle of charging and discharging is repeated 90 times at 1C. Then, the battery is put back into the constant-temperature chamber set at 25°C, and is then measured for its resistance by the above method. The resistance thus determined is the post-durability-test resistance.

The coating layer 111 may coat the entire surface of the active material 110.

The coating layer 111 may coat only a portion of the surface of the active material 110. In this case, the particles of the active material 110 are in direct contact with each other on their portions not coated with the coating layer 111, and therefore the electron conductivity between the particles of the active material 110 improves. This allows a battery to operate at high power.

A portion of the coating layer 111 may have a particle-like structure including a plurality of particles having a diameter of 500 nm or less. The particle having a diameter of 500 nm or less is a particle of a halide solid electrolyte being the coating material.

The fine particle-like structure of the coating layer 111 facilitates deformation of the coating layer 111 at the time of manufacturing an electrode plate, and thus a favorable interface can be formed between the coated active material 130 and another material. Consequently, the resistance of a battery can further be reduced. If the particles are too large in diameter, the solid electrolyte being the coating material needs to be deformed, and that makes it difficult to obtain the above effect. The lower limit of the diameter of the particle is not particularly limited, and is, for example, 5 nm.

The particle-like structure refers to a structure in which the particles having a diameter of 500 nm or less are randomly disposed in a string. The particles forming the particle-like structure may each have a diameter of 50 nm or less.

The particle-like structure including the plurality of particles having a diameter of 500 nm or less can be formed by using particles having a sufficiently small diameter as the coating material and by appropriately adjusting energy provided by a processing apparatus for formation of the coating layer 111.

The coating layer 111 may have a plurality of voids having a diameter of 50 nm or less. Such fine voids of the coating layer 111 facilitate deformation of the coating layer 111 at the time of manufacturing an electrode plate, and thus a favorable interface can be formed between the coated active material 130 and another material. Consequently, the resistance of a battery can further be reduced. The voids may each have a diameter of 5 nm or less. The lower limit of the diameter of the void is not particularly limited, and is, for example, 0.5 nm.

The voids having a diameter of 50 nm or less can be formed by using particles having a sufficiently small diameter as the coating material and by appropriately adjusting energy provided by a processing apparatus for formation of the coating layer 111.

Particles and voids can be respectively identified as having a diameter of 500 nm or less and having a diameter of 50 nm or less by observing a surface of the coated active material 130 with a scanning electron microscope, for example, at a magnification of 50,000x to 100,000x.

A mass of the coating layer 111 can be 4.5% or less of a mass of the coated active material 130. When the mass of the coating layer 111 is 4.5% or less of the mass of the coated active material 130, the resistance of a battery can further be reduced. The lower limit of the mass of the coating layer 111 is not particularly limited, and is, for example, 0.1% of the mass of the coated active material 130.

The total pore volume of the coated active material 130 can be 0.001 cm³/g or more and less than 0.014 cm³/g. A median size of the coated active material 130 can be 3.5 µm or more and 5.5 µm or less. When the total pore volume and the median size of the coated active material 130 are in these ranges, the resistance of a battery can be reduced effectively.

When the total pore volume and the median size of the coated active material 130 are in the above ranges, the resistance of a battery can be reduced. The appropriately adjusted total pore volume and median size of the coated active material 130 indicate that the material of the coating layer 111 on the surface of the active material 110 is maintained in the shape of a particle. Hence, in the densification step followed by mixing of the coated active material 130, a solid electrolyte, and a sub-material (such as a conductive additive) in manufacturing of an electrode plate, densification is achieved by deformation of the coating layer 111 according to the shape and position of each of the materials, so that a favorable interface between the materials can be formed. Since formation of such a favorable interface can reduce delamination and formation of a gap at the interface between the materials, a battery can have a larger reaction area and, consequently, a reduced resistance.

The total pore volume of the coated active material below the above range denotes a state where the particles of the coating material forming the coating layer are compact on the surface of the active material. Therefore, in the case where the total pore volume of the coated active material is too small, the coating layer may be difficult to deform according to another material and delamination may be likely to happen between the materials due to a physical rebound after the densification step. On the other hand, a large total pore volume of the coated active material denotes a state where the particles of the coating material are weakly bonded to each other and are simply attached to the surface of the active material rather than closely adhered thereto. Therefore, in the case where the total pore volume of the coated active material is too large, the coating layer is likely to be delaminated during manufacturing of an electrode plate of a battery and the active material and a solid electrolyte are likely to be brought into direct contact with each other. The resistance of the resulting battery is thought to increase consequently.

The total pore volume of the coated active material 130 may be 0.0024 cm³/g or more and 0.006 cm³/g or less, or 0.0031 cm³/g or more and 0.006 cm³/g or less.

Next, the active material 110 and the coating layer 111 will be described in details.

### <<Active material 110>>

The active material 110 is, for example, a positive electrode active material. Applying the technique of the present disclosure to a positive electrode active material makes it possible for a positive electrode to include a solid electrolyte poor in oxidation resistance but high in ionic conductivity. Examples of such a solid electrolyte include a sulfide solid electrolyte and a halide solid electrolyte.

The positive electrode active material includes a material having properties of occluding and releasing metal ions (e.g., lithium ions). A lithium-containing transition metal oxide, a transition metal fluoride, a polyanion material, a fluorinated polyanion material, a transition metal sulfide, a transition metal oxysulfide, a transition metal oxynitride, or the like can be used as the positive electrode active material. In particular, when a lithium-containing transition metal oxide is used as the positive electrode active material, it is possible to reduce a battery manufacturing cost and increase the average discharge voltage. Examples of the lithium-containing transition metal oxide include Li(NiCoAl)O₂, Li(NiCoMn)O₂, and LiCoO₂.

The positive electrode active material may include Ni, Co, and Al. The positive electrode active material may be lithium nickel cobalt aluminum oxide. For example, the positive electrode active material may be Li(NiCoAl)O₂. This configuration can further improve the energy density and the charge and discharge efficiency of a battery.

The active material 110 has, for example, the shape of a particle. The shape of the particle of the active material 110 is not limited to a particular one. The shape of the particle of the active material 110 can be the shape of a sphere, an ellipsoid, a flake, or a fiber.

A median size of the active material 110 may be 0.1 µm or more and 100 µm or less. In the case that the median size of the active material 110 is 0.1 µm or more, the coated active material 130 and another solid electrolyte can be in a favorable dispersion state. This improves the charge and discharge characteristics of a battery. In the case that the median size of the active material 110 is 100 µm or less, the diffusion rate of lithium in the active material 110 is sufficiently ensured. This can allow a battery to operate at high power.

The term "median size" herein means a particle size at 50% in a volume-based cumulative particle size distribution. The volume-based particle size distribution is measured, for example, using a laser diffraction measurement apparatus or an image analyzer.

### <<Coating layer 111>>

The coating layer 111 includes the first solid electrolyte. The first solid electrolyte has ion conductivity. The ion conductivity is typically lithium-ion conductivity. The coating layer 111 may include the first solid electrolyte as its main component, or may include only the first solid electrolyte. The term "main component" refers to a component whose content is highest on a mass basis. The phrase "including only the first solid electrolyte" means that, except inevitable impurities, no materials other than the first solid electrolyte are intentionally added. For example, the inevitable impurities include a raw material of the first solid electrolyte, a by-product generated in production of the first solid electrolyte, and the like. A proportion of a mass of the inevitable impurities in a total mass of the first coating layer 111 may be 5% or less, 3% or less, 1% or less, or 0.5% or less.

The particles of the coating material used to form the coating layer 111 may have a median size of 500 nm or less. When the particles of the coating material have a median size of 500 nm or less, the particles of the coating material can spread uniformly over the surface of the active material 110. Furthermore, the coating layer 111 that is thin and uniform in thickness can be formed by applying mechanical energy to the active material 110 and the particles of the coating material and squashing a gap therebetween. The particles of the coating material may have a median size of 100 nm, or 60 nm or less. The lower limit of the median size of the particles of the coating material is not particularly limited, and is, for example, 1 nm.

The particles of the coating material used to form the coating layer 111 can be particles of the first solid electrolyte.

The term "particle" herein may refer to an aggregate of particles, or a particle composed of a single particle. That is, the term "particle" may refer to a secondary particle, or may refer to a primary particle.

The particle of the coating material used to form the coating layer 111 may have a specific surface area of 10 m²/g or more, 20 m²/g or more, or 40 m²/g or more. A large specific surface area of the particle of the coating material relates to a high bulkiness of the coating material. When having a large specific surface area, the particles of the coating material can uniformly cling to the surface of the active material 110. Consequently, the coating layer 111 can be formed uniformly. The upper limit of the specific surface area of the particle of the coating material is not particularly limited, and is, for example, 100 m²/g.

The first solid electrolyte is a fluorine-containing solid electrolyte. The first solid electrolyte may include Li, M, and X. The X includes F, and may further include at least one selected from the group consisting of Cl, Br, and I. The M can be at least one selected from the group consisting of Ca, Mg, Al, Y, Ti, and Zr. Such a material is excellent in ion conductivity and oxidation resistance. Therefore, the coated active material 130 including the coating layer 111 including the first solid electrolyte improves the charge and discharge efficiency of a battery and the thermal stability thereof.

In the case that the X is F, the oxidation resistance of the first solid electrolyte can be improved further.

The halide solid electrolyte as the first solid electrolyte is represented, for example, by the following composition formula (1). In the composition formula (1), α, β, and δ are each a value greater than 0. The symbol X includes fluorine.

Li_{α}M_{β}X_{δ} Formula (1)

The halide solid electrolyte represented by the composition formula (1) has a high ionic conductivity, compared to a halide solid electrolyte, such as Lil, consisting only of Li and a halogen element. Therefore, a battery including the halide solid electrolyte having a composition represented by the composition formula (1) can have improved charge and discharge efficiency.

The halide solid electrolyte as the first solid electrolyte may be represented by the following composition formula (2). The symbol x satisfies 0 < x ≤ 1.2. The symbol n is a weighted average valence of an element or elements included in M. The symbol M is a metal or a metalloid. The symbol X includes fluorine, or includes fluorine and chlorine. A battery including the halide solid electrolyte represented by the composition formula (2) can have improved charge and discharge efficiency.

Li₆₋ₙₓMₓX₆ Formula (2)

The M may be at least one selected from the group consisting of Ca, Mg, Al, Y, Ti, and Zr. A lithium ion conduction path can be extended by introducing a polyvalent ion into the crystal structure including Li and F. This configuration can improve the ion conductivity of the coating layer 111 and can reduce the resistance of a battery effectively.

The M may be at least one selected from the group consisting of Al, Ti, and Zr. A lithium ion conduction path can be extended by adding at least one of the above elements being polyvalent ions that are each trivalent or tetravalent to the crystal structure including Li and F. This configuration can improve the ion conductivity of the coating layer 111 and can reduce the resistance of a battery effectively.

The M may be at least one selected from the group consisting of Al and Ti. When the M includes Al and/or Ti, the halide solid electrolyte has a high ionic conductivity.

The M may be at least one selected from the group consisting of Al and Y. That is, the halide solid electrolyte may be, as a metal element, at least one selected from the group consisting of Al and Y. The M may be Al. In the case that the M includes Al and/or Y, the halide solid electrolyte has a high ionic conductivity.

To further increase the ionic conductivity of the first solid electrolyte, a ratio of an amount of substance of Li to a total amount of substance of the M may be 1.7 or more and 4.2 or less in the halide solid electrolyte. This configuration makes it possible to further increase the ionic conductivity of the first solid electrolyte.

The halide solid electrolyte may substantially consist of Li, Ti, Al, and the X. Here, the sentence "the halide solid electrolyte substantially consists of Li, Ti, Al, and the X" means that a molar ratio (i.e., a molar fraction) of a sum of amounts of substance of Li, Ti, Al, and the X to a sum of amounts of substance of all elements in the halide solid electrolyte is 90% or more. In one example, the molar ratio (i.e., the molar fraction) may be 95% or more. The halide solid electrolyte may consist only of Li, Ti, Al, and the X.

The halide solid electrolyte may be represented by the following composition formula (3).

Li_{6-(4-x)b}(Ti₁₋ₓMₓ)_{b}F₆ Formula (3)

In the composition formula (3), 0 < x < 1 and 0 < b ≤ 1.5 are satisfied. The halide solid electrolyte having such a composition has a high ionic conductivity.

To further increase the ionic conductivity of the halide solid electrolyte, the M may be Al in the composition formula (3).

To further increase the ionic conductivity of the halide solid electrolyte, 0.1 ≤ x ≤ 0.9 may be satisfied in the composition formula (3).

In the composition formula (3), 0.1 ≤ x ≤ 0.7 may be satisfied.

The upper limit and the lower limit of the range of the x in the composition formula (3) can be any pair of numerical values selected from 0.1, 0.3, 0.4, 0.5, 0.6, 0.67, 0.7, 0.8, and 0.9.

To increase the ionic conductivity of the halide solid electrolyte, 0.8 ≤ b ≤ 1.2 may be satisfied in the composition formula (3).

The upper limit and the lower limit of the range of the b in the composition formula (3) can be any pair of numerical values selected from 0.8, 0.9, 0.94, 1.0, 1.06, 1.1, and 1.2.

The halide solid electrolyte may be crystalline or amorphous.

The shape of the halide solid electrolyte is not limited to a particular one. The shape of the halide solid electrolyte is, for example, the shape of a needle, a sphere, or an ellipsoid. The shape of the halide solid electrolyte may be the shape of a particle.

In the case that the shape of the halide solid electrolyte is, for example, the shape of a particle (e.g., a sphere), the halide solid electrolyte may have a median size of 0.01 µm or more and 100 µm or less.

The thickness of the coating layer 111 is, for example, 1 nm or more and 500 nm or less. When the thickness of the coating layer 111 is appropriately adjusted, contact between the active material 110 and another solid electrolyte can be sufficiently reduced. The thickness of the coating layer 111 can be determined by making the coated active material 130 thin by a technique such as ion milling and observing a cross-section of the coated active material 130 using a transmission electron microscope. The average of thicknesses measured at two or more random positions (e.g., five points) can be defined as the thickness of the coating layer 111.

The halide solid electrolyte may be a sulfur-free solid electrolyte. In this case, generation of a sulfur-containing gas such as a hydrogen sulfide gas from the solid electrolyte can be avoided. A sulfur-free solid electrolyte refers to a solid electrolyte represented by a composition formula including no sulfur element. Therefore, a solid electrolyte including a very small amount of sulfur, such as a solid electrolyte in which the sulfur content is 0.1 mass% or less, is classified as a sulfur-free solid electrolyte. The halide solid electrolyte may further include oxygen as an anion other than a halogen element.

### <<Method for manufacturing halide solid electrolyte>>

The halide solid electrolyte can be manufactured by the following method.

A plurality of raw material powders are prepared according to a target composition and mixed. The raw material powder can be a halide. The halide may be a compound consisting of a plurality of elements including a halogen element.

For example, in the case that the target composition is Li_{2.7}Ti_{0.3}Al_{0.7}F₆, LiF, TiF₄, and AlF₃ are prepared as the raw material powders in a molar ratio of approximately 2.7:0.3:0.7 and are mixed. The element types of the M and the X in the composition formula (1) can be determined by appropriately selecting the types of the raw material powders here. The values of α, β, γ, and δ in the composition formula (1) can be adjusted by adjusting the types of the raw material powders, a blending ratio between the raw material powders, and a synthesis process. The raw material powders may be mixed at a molar ratio adjusted in advance so as to negate a composition change that can occur in the synthesis process.

The raw material powders may be mixed using a mixing machine such as a planetary ball mill. The raw material powders are caused to react by mechanochemical milling to obtain a reaction product. The reaction product may be fired in vacuum or an inert atmosphere. Alternatively, a mixture of the raw material powders may be fired in vacuum or an inert atmosphere to obtain a reaction product. The firing is performed, for example, at 100°C or higher and 400°C or lower for one hour or longer. To suppress a composition change that can be induced by the firing, the raw material powders may be fired in an airtight container such as a quartz tube. The halide solid electrolyte is obtained through these steps.

### <<Method for manufacturing coated active material 130>>

The coated active material 130 can be manufactured by the following method.

A powder of the active material 110 and a powder of the first solid electrolyte are mixed at an appropriate ratio to obtain a mixture. The mixture is subjected to milling to provide mechanical energy to the mixture. A mixing machine such as a ball mill can be used for the milling. The milling may be performed in a dry and inert atmosphere to suppress oxidation of the materials.

The coated active material 130 may be manufactured by a dry composite particle forming method. Processing by the dry composite particle forming method includes providing mechanical energy generated by at least one selected from the group consisting of impact, compression, and shearing to the active material 110 and the first solid electrolyte. The active material 110 and the first solid electrolyte are mixed at an appropriate ratio.

The apparatus used in manufacturing of the coated active material 130 is not limited to a particular one, and can be an apparatus capable of providing mechanical energy generated by impact, compression, or shearing to the mixture of the active material 110 and the first solid electrolyte. Example of the apparatus capable of providing such mechanical energy include processing apparatuses (composite particle forming machines) such as a ball mill, Mechanofusion (manufactured by HOSOKAWA MICRON CORPORATION), Nobilta (manufactured by HOSOKAWA MICRON CORPORATION), and BALANCE GRAN (manufactured by FREUND-TURBO CORPORATION).

Mechanofusion is a composite particle forming machine to which a dry mechanical composite forming technique in which high mechanical energy is applied to a plurality of different raw material powders is applied. Mechanofusion provides mechanical energy generated by compression, shearing, and friction to raw material powders added between a rotating vessel and a press head. Composite particle formation is thereby performed.

Nobilta is a composite particle forming machine to which a dry mechanical composite forming technique developed from a composite particle forming technique is applied for forming a composite from raw materials being nanoparticles. Nobilta manufactures composite particles by providing mechanical energy generated by impact, compression, and shearing to a plurality of raw material powders.

In a horizontal cylindrical mixing vessel of Nobilta, a rotor disposed to leave a given amount of clearance between the rotor and the inner wall of the mixing vessel rotates at high speed to repeat a process of forcing raw material powders to go through the clearance. Through this processing, the force of impact, compression, and shearing acts on the mixture, and thereby composite particles of the active material 110 and the first solid electrolyte can be produced.

BALANCE GRAN includes a chopper that stirs a powder in a spiral manner from the outer periphery toward the inner periphery to promote convection, and is also equipped with an agitator scraper that rotates in the opposite direction of the chopper. Composite particles can be produced by uniformly dispersing a mixture by the actions of these parts.

Regardless of which of the apparatuses is used, the thickness of the coating layer 111, the total pore volume of the coated active material 130, and the like can be controlled by adjusting conditions such as the rotation speed, the processing time, the amounts of the raw material powders added, and the particle sizes of the materials. The longer the processing time is, the smaller the total pore volume is. The higher the rotation speed of the apparatus is, the smaller the total pore volume is.

The processing using the above apparatuses is not essential. The coated active material 130 may be manufactured by mixing the active material 110 and the first solid electrolyte using a mortar, a mixer, or the like. The first solid electrolyte may be deposited on the surface of the active material 110 by a method such as spraying, spray dry coating, electrodeposition, immersion, or mechanical mixing using a disperser.

### (Modification)

FIG. 2 is a cross-sectional view schematically showing a configuration of a coated active material 140 according to a modification. The coated active material 140 includes the active material 110 and a coating layer 120. In the present modification, the coating layer 120 includes a first coating layer 111 and a second coating layer 112. The first coating layer 111 is a layer including the first solid electrolyte. The second coating layer 112 is a layer including an underlayer material. The first coating layer 111 is positioned on the outer side of the second coating layer 112. This configuration can further reduce the resistance of a battery.

The first coating layer 111 is the coating layer 111 described in Embodiment 1.

The second coating layer 112 is positioned between the first coating layer 111 and the active material 110. In the present modification, the second coating layer 112 is in direct contact with the active material 110. The second coating layer 112 may include, as the underlayer material, a material having a low electron conductivity, such as an oxide material or an oxide solid electrolyte.

A ratio of a total pore volume of the coated active material 140 to the total pore volume of the active material 110 may be less than 7.2 also in the present modification. In this case, the resistance of a battery can be reduced. An increase in resistance of a battery in a durability test can also be reduced.

The ratio of the total pore volume of the coated active material 140 to the total pore volume of the active material 110 may be 1.2 or more also in the present modification. In this case, the resistance of a battery can be reduced. An increase in resistance of a battery in a durability test can also be reduced.

The total pore volume of the coated active material 140 can be 0.001 cm³/g or more and less than 0.014 m³/g also in the present modification. A median size of the coated active material 140 can be 3.5 µm or more and 5.5 µm or less. When the total pore volume and the median size of the coated active material 140 are in these ranges, the resistance of a battery can be reduced effectively.

Examples of the oxide material include SiO₂, Al₂O₃, TiO₂, B₂O₃, Nb₂O₅, WO₃, and ZrO₂. Examples of the oxide solid electrolyte include Li-Nb-O compounds such as LiNbO₃, Li-B-O compounds such as LiBO₂ and Li₃BO₃, Li-Al-O compounds such as LiAlO₂, Li-Si-O compounds such as Li₄SiO₄, Li-Ti-O compounds such as Li₂SO₄ and Li₄Ti₅O₁₂, Li-Zr-O compounds such as Li₂ZrO₃, Li-Mo-O compounds such as Li₂MoO₃, Li-V-O compounds such as LiV₂O₅, and Li-W-O compounds such as Li₂WO₄. The underlayer material may be one selected from these, or may be a mixture of two or more of these.

The underlayer material may be a lithium-ion-conductive solid electrolyte. The underlayer material is typically a lithium-ion-conductive oxide solid electrolyte. Oxide solid electrolytes have a high ionic conductivity and an excellent high-potential stability. The charge and discharge efficiency of a battery can be improved by using an oxide solid electrolyte as the underlayer material.

The underlayer material may be a Nb-containing material. The underlayer material typically includes lithium niobium oxide (LiNbO₃). This configuration can improve the charge and discharge efficiency of a battery. Any of above-described materials can also be used as the oxide solid electrolyte being the underlayer material.

In one example, the ionic conductivity of the halide solid electrolyte included in the first coating layer 111 is higher than the ionic conductivity of the underlayer material included in the second coating layer 112. This configuration can further suppress oxidation of another solid electrolyte without sacrificing the ionic conductivity.

The thickness of the first coating layer 111 is, for example, 1 nm or more and 500 nm or less. The thickness of the second coating layer 112 is, for example, 1 nm or more and 500 nm or less. When the thicknesses of the first coating layer 111 and the second coating layer 112 are appropriately adjusted, contact between the active material 110 and another solid electrolyte can be sufficiently reduced. The thicknesses of the layers can be determined by the above-described method.

### <<Method for manufacturing coated active material 140>>

The coated active material 140 can be manufactured by the following method.

First, the second coating layer 112 is formed on the surface of the active material 110. The method for forming the second coating layer 112 is not limited to a particular one. Examples of the method for forming the second coating layer 112 include a liquid phase coating method and a gas phase coating method.

For example, according to the liquid phase coating method, a precursor solution of the underlayer material is applied to the surface of the active material 110. When the second coating layer 112 including LiNbO₃ is to be formed, the precursor solution can be a solution mixture (sol solution) of a solvent, a lithium alkoxide, and a niobium alkoxide. The lithium alkoxide is, for example, lithium ethoxide. The niobium alkoxide is, for example, niobium ethoxide. The solvent is, for example, an alcohol such as ethanol. The amount of the lithium alkoxide and that of the niobium alkoxide are adjusted according to a target composition of the second coating layer 112. Water may be added to the precursor solution, if needed. The precursor solution may be acidic or alkaline.

The method for applying the precursor solution to the surface of the active material 110 is not limited to a particular one. For example, a tumbling fluidized bed granulation coating apparatus can be used to apply the precursor solution to the surface of the active material 110. A tumbling fluidized bed granulation coating apparatus can spray the precursor solution on the active material 110 to apply the precursor solution to the surface of the active material 110 while rolling and fluidizing the active material 110. In this manner, a precursor coating is formed on the surface of the active material 110. After that, the active material 110 coated with the precursor coating is subjected to a thermal treatment. Gelation of the precursor coating progresses by the thermal treatment, and thus the second coating layer 112 is formed.

Examples of the gas phase coating method include pulsed laser deposition (PLD), vacuum deposition, sputtering, thermal chemical vapor deposition (CVD), and plasma-enhanced chemical vapor deposition. For example, in PLD, an ion-conducting material as a target is irradiated with a high-energy pulsed laser (e.g., a KrF excimer laser with a wavelength of 248 nm) to deposit the sublimed ion-conducting material on the surface of the active material 110. When the second coating layer 112 being LiNbO₃ is to be formed, densely sintered LiNbO₃ is used as the target.

The method for forming the second coating layer 112 is not limited to the above examples. The second coating layer 112 may be formed by a method such as spraying, spray dry coating, electrodeposition, immersion, or mechanical mixing using a disperser.

After the second coating layer 112 is formed, the first coating layer 111 is formed by the method described in Embodiment 1. The coated active material 140 can thereby be obtained.

### (Embodiment 2)

FIG. 3 is a cross-sectional view schematically showing a configuration of an electrode material 1000 of Embodiment 2.

The electrode material 1000 includes the coated active material 130 of Embodiment 1 and a second solid electrolyte 100. The electrode material 1000 can be a positive electrode material. The coated active material 140 of the modification can be used instead of the coated active material 130 or along with the coated active material 130. The electrode material 1000 of the present embodiment is suitable for reducing an increase in resistance of a battery in a durability test.

The active material 110 of the coated active material 130 is separated from the second solid electrolyte 100 by the coating layer 111. The active material 110 is not necessarily in direct contact with the second solid electrolyte 100. This is because the coating layer 111 is ionically conductive.

The second solid electrolyte 100 may include at least one selected from the group consisting of a halide solid electrolyte, a sulfide solid electrolyte, an oxide solid electrolyte, a polymer solid electrolyte, and a complex hydride solid electrolyte.

Examples of the halide solid electrolyte include the materials described in Embodiment 1 as the first solid electrolyte. That is, the composition of the second solid electrolyte 100 may be the same as or different from that of the first solid electrolyte.

The oxide solid electrolyte is an oxygen-containing solid electrolyte. As an anion other than oxygen, the oxide solid electrolyte may further include an anion other than a sulfur element or a halogen element.

Examples of the oxide solid electrolyte can include: a NASICON solid electrolyte typified by LiTi₂(PO₄)₃ and element-substituted substances thereof; a (LaLi)TiO₃-based perovskite solid electrolyte; a LISICON solid electrolyte typified by Li₁₄ZnGe₄O₁₆, Li₄SiO₄, LiGeO₄ and element-substituted substances thereof; a garnet solid electrolyte typified by Li₇La₃Zr₂O₁₂ and element-substituted substances thereof; Li₃PO₄ and N-substituted substances thereof; and a glass or glass ceramic including a base material that includes a Li-B-O compound such as LiBO₂ or Li₃BO₃ and to which a material such as Li₂SO₄ or Li₂CO₃ has been added.

For example, a compound of a polymer compound and a lithium salt can be used as the polymer solid electrolyte. The polymer compound may have an ethylene oxide structure. The polymer compound having an ethylene oxide structure can contain a large amount of a lithium salt. Therefore, the ionic conductivity can be increased further. Examples of the lithium salt include LiPF₆, LiBF₄, LiSbF₆, LiAsF₆, LiSO₃CF₃, LiN(SO₂F)₂, LiN(SO₂CF₃)₂, LiN(SO₂C₂F₅)₂, LiN(SO₂CF₃)(SO₂C₄F₉), and LiC(SO₂CF₃)₃. One lithium salt selected from these may be used alone, or a mixture of two or more lithium salts selected from these may be used.

For example, LiBH₄-LiI or LiBH₄-P₂S₅ can be used as the complex hydride solid electrolyte.

The second solid electrolyte 100 may include Li and S. In other words, the second solid electrolyte 100 may include a sulfide solid electrolyte. The sulfide solid electrolyte has a high ionic conductivity and can improve the charge and discharge efficiency of a battery. However, the sulfide solid electrolyte can be poor in oxidation resistance. In the case that a battery includes a sulfide solid electrolyte as the second solid electrolyte 100, an increased effect is achieved by applying the technique of the present disclosure.

For example, Li₂S-P₂S₅, Li₂S-SiS₂, Li₂S-B₂S₃, Li₂S-GeS₂, L_{13.25}Ge_{0.25}P_{0.75}S₄, or Li₁₀GeP₂S₁₂ can be used as the sulfide solid electrolyte. LiX, Li₂O, MO_{q}, LiₚMO_{q}, or the like may be added thereto. Here, the X in "LiX" is at least one selected from the group consisting of F, Cl, Br, and I. The element M in "MO_{q}" and "LiₚMO_{q}" is at least one selected from the group consisting of P, Si, Ge, B, Al, Ga, In, Fe, and Zn. The symbols p and q in "MO_{q}" and "LiₚMO_{q}" are each an independent natural number.

The second solid electrolyte 100 may include two or more materials selected from the materials mentioned as the solid electrolyte. The second solid electrolyte 100 may include, for example, the halide solid electrolyte and the sulfide solid electrolyte.

The lithium ion conductivity of the second solid electrolyte 100 may be higher than that of the first solid electrolyte.

The second solid electrolyte 100 may include inevitable impurities such as a starting material used for synthesis of the solid electrolyte, a by-product, a decomposition product, and the like. This is applicable to the first solid electrolyte.

The shape of the second solid electrolyte 100 is not limited to a particular one, and may be the shape of a needle, a sphere, an ellipsoid, or the like. The second solid electrolyte 100 may have the shape of a particle.

When the second solid electrolyte 100 has the shape of a particle (e.g., a sphere), the second solid electrolyte 100 may have a median size of 100 µm or less. When the median size of the second solid electrolyte 100 is 100 µm or less, the coated active material 130 and the second solid electrolyte 100 can be in a favorable dispersion state in the electrode material 1000. This improves the charge and discharge characteristics of a battery. The median size of the second solid electrolyte 100 may be 10 µm or less.

The median size of the second solid electrolyte 100 may be smaller than that of the coated active material 130. In this configuration, the second solid electrolyte 100 and the coated active material 130 can be in a more favorable dispersion state in the electrode material 1000.

The median size of the coated active material 130 may be 0.1 µm or more and 100 µm or less. In the case that the median size of the coated active material 130 is 0.1 µm or more, the coated active material 130 and the second solid electrolyte 100 can be in a favorable dispersion state in the electrode material 1000. This improves the charge and discharge characteristics of a battery. In the case that the median size of the coated active material 130 is 100 µm or less, the diffusion rate of lithium in the coated active material 130 is sufficiently ensured. This can allow a battery to operate at high power.

The median size of the coated active material 130 may be greater than the median size of the second solid electrolyte 100. In this case, the coated active material 130 and the second solid electrolyte 100 can be in a favorable dispersion state.

As shown in FIG. 3, the second solid electrolyte 100 and the coated active material 130 may be in contact with each other in the electrode material 1000. In this case, the coating layer 111 and the second solid electrolyte 100 are in contact with each other.

The electrode material 1000 may include a plurality of particles of the second solid electrolyte 100 and a plurality of particles of the coated active material 130. That is, the electrode material 1000 can be a mixture of a powder of the coated active material 130 and a powder of the second solid electrolyte 100.

The amount of the second solid electrolyte 100 and the amount of the coated active material 130 may be the same or may be different from each other in the electrode material 1000.

### <<Additional materials>>

The electrode material 1000 may include a binder to improve the adhesion between the particles. The binder is used, for example, to improve the binding properties of the materials of an electrode. Examples of the binder include polyvinylidene fluoride, polytetrafluoroethylene, polyethylene, polypropylene, aramid resin, polyamide, polyimide, polyamide-imide, polyacrylonitrile, polyacrylic acid, polyacrylic acid methyl ester, polyacrylic acid ethyl ester, polyacrylic acid hexyl ester, polymethacrylic acid, polymethacrylic acid methyl ester, polymethacrylic acid ethyl ester, polymethacrylic acid hexyl ester, polyvinyl acetate, polyvinylpyrrolidone, polyether, polycarbonate, polyethersulfone, polyetherketone, polyetheretherketone, polyphenylene sulfide, hexafluoropolypropylene, styrene-butadiene rubber, carboxymethyl cellulose, and ethyl cellulose. Moreover, a copolymer of two or more monomers selected from the group consisting of tetrafluoroethylene, hexafluoroethylene, hexafluoropropylene, perfluoroalkylvinyl ether, vinylidene fluoride, chlorotrifluoroethylene, ethylene, propylene, butadiene, styrene, pentafluoropropylene, fluoromethyl vinyl ether, acrylic acid ester, acrylic acid, and hexadiene can be used. One selected from these may be used alone, or two or more selected from these may be used in combination.

The binder may be an elastomer for its excellent binding properties. Elastomers are polymers having rubber elasticity. The elastomer used as the binder may be a thermoplastic elastomer or a thermosetting elastomer. The binder may include a thermoplastic elastomer. Examples of the thermoplastic elastomer include styrene-ethylene-butylene-styrene (SEBS), styrene-ethylene-propylene-styrene (SEPS), styrene-ethylene-ethylene-propylene-styrene (SEEPS), butylene rubber (BR), isoprene rubber (IR), chloroprene rubber (CR), acrylonitrile-butadiene rubber (NBR), styrene-butylene rubber (SBR), styrene-butadiene-styrene (SBS), styrene-isoprene-styrene (SIS), hydrogenated isoprene rubber (HIR), hydrogenated butyl rubber (HIIR), hydrogenated nitrile rubber (HNBR), hydrogenated styrene-butylene rubber (HSBR), polyvinylidene fluoride (PVdF), and polytetrafluoroethylene (PTFE). One selected from these may be used alone, or two or more selected from these may be used in combination.

The electrode material 1000 may include a conductive additive to increase the electronic conductivity. As the conductive additive can be used, for example, graphites such as natural graphite and artificial graphite; carbon blacks such as acetylene black and ketjen black; conductive fibers such as a carbon fiber and a metal fiber; metal powders such as a fluorinated carbon powder and an aluminum powder; conductive whiskers such as a zinc oxide whisker and a potassium titanate whisker; conductive metal oxides such as titanium oxide; and conductive polymer compounds such as polyaniline, polypyrrole, and polythiophene. Using a conductive carbon additive can seek cost reduction.

The above conductive additive may be included in the coating layer 111.

### <<Method for manufacturing electrode material>>

The electrode material 1000 is obtained by mixing a powder of the coated active material 130 and a powder of the second solid electrolyte 100. The method for mixing the coated active material 130 and the second solid electrolyte 100 is not limited to a particular one. The coated active material 130 and the second solid electrolyte 100 may be mixed using a tool such as a mortar or using a mixing machine such as a ball mill.

### (Embodiment 3)

Embodiment 3 will be hereinafter described. The description overlapping with those in Embodiments 1 and 2 is omitted as appropriate.

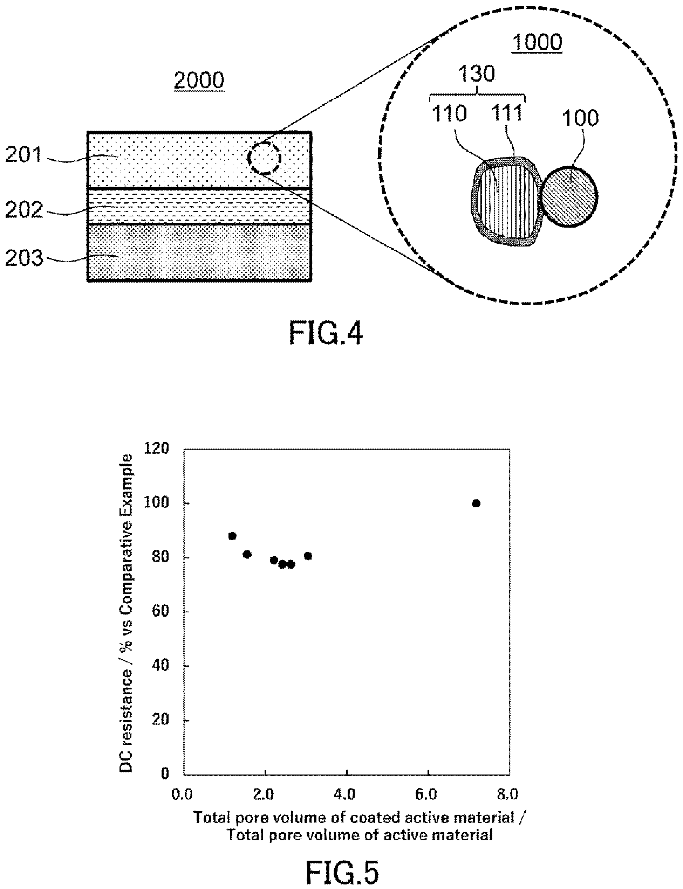

FIG. 4 is a cross-sectional view schematically showing a configuration of a battery 2000 of Embodiment 3. The battery 2000 includes a positive electrode 201, a separator layer 202, and a negative electrode 203. The separator layer 202 is disposed between the positive electrode 201 and the negative electrode 203. The positive electrode 201 includes the electrode material 1000 described in Embodiment 2. This configuration makes it possible to reduce an increase in resistance of the battery 2000 in a durability test and provide a battery excellent in durability.

The thicknesses of the positive electrode 201 and the negative electrode 203 may each be 10 µm or more and 500 µm or less. When the thicknesses of the positive electrode 201 and the negative electrode 203 are each 10 µm or more, a sufficient energy density of the battery can be ensured. When the thicknesses of the positive electrode 201 and the negative electrode 203 are each 500 µm or less, the battery 2000 can operate at high power.

The separator layer 202 is an electrolyte layer including an electrolyte material. The separator layer 202 may include at least one solid electrolyte selected from the group consisting of a sulfide solid electrolyte, an oxide solid electrolyte, a halide solid electrolyte, a polymer solid electrolyte, and a complex hydride solid electrolyte. The details of each solid electrolyte are as described in Embodiments 1 and 2.

The separator layer 202 may have a thickness of 1 µm or more and 300 µm or less. When the separator layer 202 has a thickness of 1 µm or more, the positive electrode 201 and the negative electrode 203 can be more reliably separated. When the separator 202 has a thickness of 300 µm or less, the battery 2000 can operate at high power.

The negative electrode 203 includes a material having properties of occluding and releasing metal ions (e.g., lithium ions) as a negative electrode active material.

A metal material, a carbon material, an oxide, a nitride, a tin compound, a silicon compound, or the like can be used as the negative electrode active material. The metal material may be an elemental metal. Alternatively, the metal material may be an alloy. Examples of the metal material include lithium metal and a lithium alloy. Examples of the carbon material include natural graphite, coke, semi-graphitized carbon, a carbon fiber, spherical carbon, artificial graphite, and amorphous carbon. In terms of the capacity density, silicon (Si), tin (Sn), a silicon compound, a tin compound, or the like can be suitably used.

The median size of particles of the negative electrode active material may be 0.1 µm or more and 100 µm or less.

The negative electrode 203 may include an additional material such as a solid electrolyte. The materials described in Embodiment 1 or 2 can be used as the solid electrolyte.

### EXAMPLES

Hereinafter, the details of the present disclosure will be described using examples and comparative examples. The present disclosure is not limited to the following examples.

### <Example 1>

### [Production of halide solid electrolyte]

LiF, TiF₄, and AlF₃ being raw material powders were weighed in an argon atmosphere having a dew point of -60°C or lower so that the molar ratio would be LiF:TiF₄:AlF₃ = 2.7:0.3:0.7. These were put into a 45 cc pod of a planetary ball mill together with a 0.5 mmϕ ball (25 g). γ-Butyrolactone (GBL) as an organic solvent was dropped into the pod so that a solids rate would be 50 mass%. The solids rate is calculated by {(the mass of the raw materials)/(the mass of the raw materials + the mass of the solvent)} × 100. The mixture was subjected to milling using the planetary ball mill for 12 hours at 500 rpm. After the milling, the ball was removed to obtain a slurry. The slurry was dried with a mantle heater under a nitrogen flow at 200°C for one hour. The resulting solid was crushed in a mortar to give a powder of a halide solid electrolyte of Example 1. The halide solid electrolyte of Example 1 had a composition represented by Li₂.₇Ti_{0.3}Al_{0.7}F₆ (hereinafter referred to as "LTAF"). In a SEM image, the diameter of each particle of the halide solid electrolyte was in the range from 10 nm to 100 nm.

### [Production of coated active material]

A powder of Li(NiCoAl)O₂ (hereinafter referred to as "NCA") was prepared as a positive electrode active material. Next, a coating layer made of the LTAF was formed on the NCA. The coating layer was formed by stirring processing using a large high-speed mixing machine (BG-25L manufactured by FREUND-TURBO CORPORATION). Specifically, the NCA and the LTAF were weighed so that the mass ratio would be NCA:LTAF = 97.3:2.7. The NCA and the LTAF were stirred and mixed at 700 rpm for one hour using the high-speed mixing machine. Subsequently, the NCA and the LTAF were further stirred and mixed at 1300 rpm for one hour. A coated active material of Example 1 was obtained in this manner.

In Table 1, for example, "rotation speed 700 rpm, 1300 rpm" and "processing time 1 + 1" mean that the processing was performed at a rotation speed of 700 rpm for one hour and then at a rotation speed of 1300 rpm for one hour.

### [Measurement of total pore volume]

The total pore volume of the coated active material was measured under the following conditions. An amount of 3 g of the coated active material was put in a test tube for measurement, and the test tube was then connected to a specific surface area and pore size distribution measurement apparatus (BELSORP MINI manufactured by MicrotracBEL Corp.). After that, a nitrogen gas adsorption-desorption test was carried out to obtain an adsorption-desorption isotherm under the conditions where the adsorption temperature was 77 K and the upper limit of the adsorption relative pressure was 0.99 (P/P0). The adsorption-desorption isotherm was analyzed by the BJH method (the Barrett-Joyner-Halenda method) using analysis software BELMaster 7 to calculate the total pore volume.

The total pore volume of the coated active material of Example 1 was 0.006 cm³/g. The total pore volume of the NCA was also measured by the same method. The total pore volume of the NCA was 0.00197 cm³/g. A ratio of the total pore volume of the coated active material to the total pore volume of the NCA was 3.0.

### [Measurement of median size]

The coated active material of Example 1 was measured for its median size (d50). A laser diffraction scattering particle size distribution analyzer (LA-960 manufactured by HORIBA, Ltd.) was used for the measurement. The median size (d50) of the coated active material of Example 1 was 4.8 µm.

### [Production of sulfide solid electrolyte]

Li₂S and P₂S₅ being raw material powders were weighed in an argon glove box in which the dew point was -60°C or lower so that the molar ratio would be Li₂S:P₂S₅ = 75:25. These were crushed and mixed in a mortar to obtain a mixture. Subsequently, milling was performed using a planetary ball mill (Type P-7 manufactured by Fritsch GmbH) at 510 rpm for 10 hours. A solid electrolyte in a glass state was obtained in this manner. The solid electrolyte in a glass state was subjected to a thermal treatment in an inert atmosphere at 270°C for two hours. Li₂S-P₂S₅ being a sulfide solid electrolyte in a glass ceramic state was thereby obtained.

### [Production of battery]

### (Production of positive electrode)

The coated active material and the sulfide solid electrolyte of Example 1 were weighed so that the ratio of the volume of the coated active material to that of the sulfide solid electrolyte would be 6:4. These were added to a tetrahydroxynaphthalene solvent together with a vapor-grown carbon fiber (VGCF) as a conductive additive and a styrene-ethylene-butylene-styrene block copolymer (SEBS) as a binder. The resulting mixture was sufficiently dispersed with an ultrasonic homogenizer to produce a positive electrode paste. The amount of the conductive additive was 3 parts by mass relative to 100 parts by mass of the coated active material. The amount of the binder was 0.4 parts by mass relative to 100 parts by mass of the coated active material. "VGCF" is a registered trademark of Resonac Corporation.

### (Production of negative electrode)

Lithium titanate as a negative electrode active material and the sulfide solid electrolyte were weighed so that the ratio of the volume of the lithium titanate to that of the sulfide solid electrolyte would be 6.5:3.5. These were added to a tetralin solvent together with a vapor-grown carbon fiber (VGCF) as a conductive additive and a styrene-ethylene-butylene-styrene block copolymer (SEBS) as a binder. The resulting mixture was sufficiently dispersed with an ultrasonic homogenizer to produce a negative electrode paste. The amount of the conductive additive was 1 part by mass relative to 100 parts by mass of the negative active material. The amount of the binder was 2 parts by mass relative to 100 parts by mass of the negative active material.

### (Production of all-solid-state battery)

The positive electrode paste was applied to an aluminum foil serving as a positive electrode current collector by blade coating using an applicator to form a coating film. The coating film was dried on a hot plate at 100°C for 30 minutes. A positive electrode including the positive electrode current collector and the positive electrode active material layer was obtained in this manner.

Next, the positive electrode was pressed. A paste for electrolyte layer formation was applied to a surface of the pressed positive electrode active material layer with a die coater to give a layered body composed of the positive electrode and the coating film. The layered body was dried on a hot plate at 100°C for 30 minutes. After that, the layered body was roll-pressed at a linear pressure of 2 tons/cm. A layered body to be on the positive electrode side was obtained in this manner, the layered body including the positive electrode current collector, the positive electrode active material layer, and a solid electrolyte layer. The paste for electrolyte layer formation was prepared by ultrasonically dispersing 0.4 parts by mass of acrylate butadiene rubber serving as a binder and 100 parts by mass of the sulfide solid electrolyte in a heptane solvent.

The negative electrode paste was applied to a nickel foil serving as a negative electrode current collector to form a coating film. The coating film was dried on a hot plate at 100°C for 30 minutes. A negative electrode including the negative electrode current collector and the negative electrode active material layer was obtained in this manner.

Next, the negative electrode was pressed. The paste for electrolyte layer formation was applied to a surface of the pressed negative electrode active material layer with a die coater to give a layered body composed of the negative electrode and the coating film. The layered body was dried on a hot plate at 100°C for 30 minutes. After that, the layered body was roll-pressed at a linear pressure of 2 tons/cm. A layered body to be on the negative electrode side was obtained in this manner, the layered body including the negative electrode current collector, the negative electrode active material layer, and a solid electrolyte layer.

Each of the layered body to be on the positive electrode side and the layered body to be on the negative electrode side was subjected to punching processing to give a piece in a given shape. The pieces of the layered body to be on the positive electrode side and the layered body to be on the negative electrode side were stacked such that the solid electrolyte layers thereof were in contact with each other. After that, the pieces of the layered body to be on the positive electrode side and the layered body to be on the negative electrode side were roll-pressed at 130°C and a linear pressure of 2 tons/cm. A power generation element including the positive electrode, the solid electrolyte layer, and the negative electrode in this order was obtained in this manner. A positive electrode terminal and a negative electrode terminal were attached to the power generation element, which was put into a container made of a laminate film. The container was sealed, and was held tightly under a pressure of 5 MPa. An all-solid-state battery of Example 1 was obtained in this manner.

### [DC resistance measurement]

The all-solid-state battery was measured for its DC resistance by the following method. Constant current charging was performed at a current of 1C. After the cell voltage reached 2.95 V, constant voltage charging was performed at 2.95 V. At the moment when the charging current reached 0.01C, the charging was finished. Subsequently, constant current discharging was performed at a current of 1C. At the moment when the cell voltage decreased to 1.5 V, the discharging was finished.

To measure the DC resistance, the all-solid-state battery was charged again to 2.2 V at a current of C/3 and was then discharged at a current of 4C. A difference between an open-circuit voltage immediately before the discharging at 4C and a voltage 10 seconds after the start of the discharging was divided by a current value corresponding to 4C to calculate the DC resistance (initial resistance). Table 1 shows the result.

### [Durability test]

The all-solid-state battery was placed in a constant-temperature chamber at 60°C, and a cycle of charging and discharging was repeated 90 times at a current of 1C. Then, the all-solid-state battery was put back into the constant-temperature chamber set at 25°C, and DC resistance measurement was performed in the above-described method to determine a post-durability-test DC resistance. A ratio of the post-durability-test DC resistance to the pre-durability-test DC resistance was calculated as the resistance increase rate.

### <Example 2>

A coated active material of Example 2 was produced in the same manner as in Example 1, except that the processing using the high-speed mixing machine was performed at 700 rpm for one hour, at 1300 rpm for one hour, and at 1950 rpm for one hour. After that, the total pore volume of the coated active material of Example 2 was measured in the same manner as in Example 1. An all-solid-state battery was produced in the same manner as in Example 1 using the coated active material of Example 2 and was measured for the DC resistance and the resistance increase rate.

### <Example 3>

A coated active material of Example 3 was produced in the same manner as in Example 1, except that the processing using the high-speed mixing machine was performed at 700 rpm for one hour, at 1300 rpm for one hour, and at 1950 rpm for two hours. After that, the total pore volume of the coated active material of Example 3 was measured in the same manner as in Example 1. An all-solid-state battery was produced in the same manner as in Example 1 using the coated active material of Example 3 and was measured for the DC resistance and the resistance increase rate.

### <Example 4>

A coated active material of Example 4 was produced in the same manner as in Example 1, except that the processing using the high-speed mixing machine was performed at 700 rpm for one hour, at 1300 rpm for one hour, and at 1900 rpm for 10 minutes. After that, the total pore volume of the coated active material of Example 4 was measured in the same manner as in Example 1. An all-solid-state battery was produced in the same manner as in Example 1 using the coated active material of Example 4 and was measured for the DC resistance and the resistance increase rate.

### <Example 5>

A coated active material of Example 5 was produced in the same manner as in Example 1, except that the processing using the high-speed mixing machine was performed at 700 rpm for one hour, at 1300 rpm for one hour, and at 1900 rpm for one hour. After that, the total pore volume of the coated active material of Example 5 was measured in the same manner as in Example 1. An all-solid-state battery was produced in the same manner as in Example 1 using the coated active material of Example 5 and was measured for the DC resistance and the resistance increase rate.

### <Example 6>

### [Production of coated active material]

A powder of NCA was prepared as a positive electrode active material. Next, a coating layer was formed on the NCA using LTAF having a particle diameter of 10 nm to 100 nm. The coating layer was formed by stirring processing using a small high-speed mixing machine (BG-2L manufactured by FREUND-TURBO CORPORATION). Specifically, the NCA and the LTAF were weighed so that the mass ratio would be NCA:LTAF = 97.3:2.7. These were stirred and mixed at 2300 rpm for one hour using the small high-speed mixing machine. After that, the rotation speed was changed to 3580 rpm and stirring and mixing were performed for 1.5 hours. A coated active material of Example 6 was obtained in this manner.

Subsequently, the coated active material of Example 6 was measured for its total pore volume in the same manner as in Example 1. An all-solid-state battery was produced in the same manner as in Example 1 using the coated active material of Example 10 and was measured for the DC resistance and the resistance increase rate.

### [SEM observation]

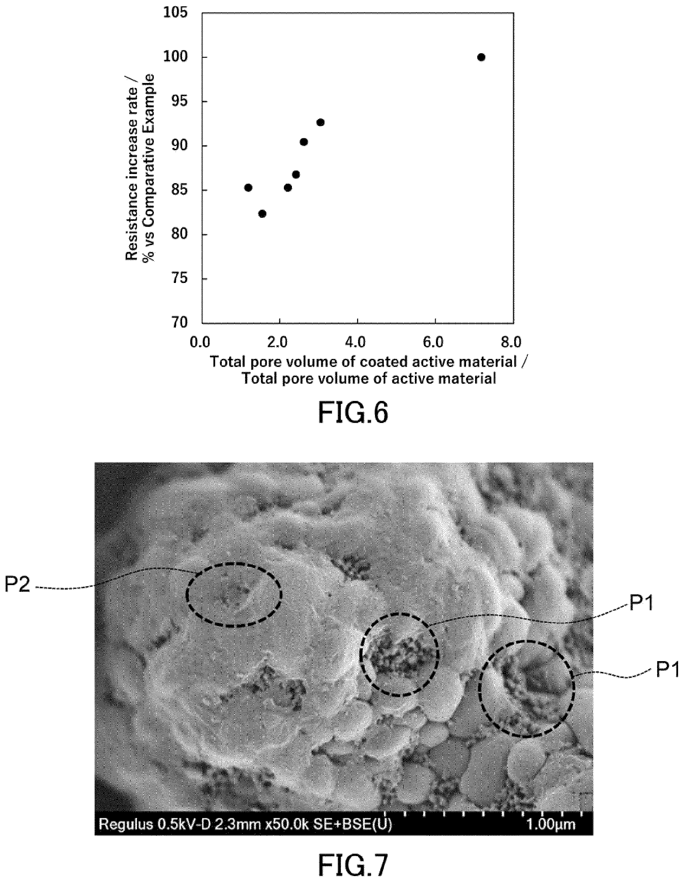

A surface of the coated active material of Example 6 was observed with a scanning electron microscope (Regulus 8220 manufactured by Hitachi High-Tech Corporation; 0.5 kV; 50,000x). FIG. 7 shows the result. FIG. 7 is a SEM image of the surface of the coated active material of Example 6. In the SEM image shown in FIG. 7, large asperities are asperities of the NCA itself. The LTAF particles were attached to the surface of the NCA. A recessed portion at the surface of the NCA was filled with the coating layer made of the LTAF. The coating layer of the coated active material had a particle-like structure P1 including a plurality of particles having a diameter of 500 nm or less. Fine particles in the particle-like structure P1 are the particles of the LTAF as the coating material. Moreover, the coating layer had a plurality of voids P2 having a diameter of 50 nm or less. The thin LTAF coating was present to fill the asperities at the surface of the NCA, and the voids P2 were present in the coating. It is inferred that this structure facilitates deformation of the coating layer at the time of manufacturing an electrode plate and contributes to formation of a favorable interface between the coated active material and another material.

### <Comparative Example 1>

A coated active material of Comparative Example 1 was produced in the same manner as in Example 1, except that the processing using the high-speed mixing machine was performed at 700 rpm for one hour. After that, the total pore volume of the coated active material of Comparative Example 1 was measured in the same manner as in Example 1. An all-solid-state battery was produced in the same manner as in Example 1 using the coated active material of Comparative Example 1 and was measured for the DC resistance and the resistance increase rate.

Table 1 shows the results for the total pore volume measurement, the results for the DC resistance measurement, and the results for the resistance increase rate calculation. In Table 1, the DC resistance is a relative value relative to the DC resistance of Comparative Example 1 defined as 100. Likewise, the resistance increase rate is a relative value relative to the resistance increase rate of Comparative Example 1 defined as 100.

FIG. 5 is a graph showing a relation between the DC resistance and the total pore volume ratio. The horizontal axis indicates the total pore volume ratio in Table 1. The vertical axis indicates the DC resistance in Table 1. FIG. 6 is a graph showing a relation between the resistance increase rate and the total pore volume ratio. The horizontal axis indicates the total pore volume ratio in Table 1. The vertical axis indicates the resistance increase rate in Table 1. The total pore volume ratio is a ratio of the total pore volume of the coated active material to the total pore volume of the NCA.

**[Table 1]**

| | Mixing machine | Rotation speed (rpm) | Processing time (hour) | Total pore volume (cm³/g) | Total pore volume ratio | DC resistance (%) | Resistance increase rate (%) |
|---|---|---|---|---|---|---|---|
| Comparative Example 1 | Large | 700 | 1 | 0.014 | 7.2 | 100 | 100 |
| Example 1 | Large | 700, 1300 | 1 + 1 | 0.006 | 3.0 | 81 | 93 |
| Example 2 | Large | 700, 1300, 1950 | 1 + 1 + 1 | 0.0044 | 2.2 | 79 | 85 |
| Example 3 | Large | 700, 1300, 1950 | 1 + 1 + 2 | 0.0024 | 1.2 | 88 | 85 |
| Example 4 | Large | 700, 1300, 1900 | 1 + 1 + 0.2 | 0.0052 | 2.6 | 78 | 90 |
| Example 5 | Large | 700, 1300, 1900 | 1 + 1 + 1 | 0.0048 | 2.4 | 78 | 87 |
| Example 6 | Small | 2300, 3580 | 1 + 1.5 | 0.0031 | 1.6 | 81 | 82 |

| | | | | | | | |
|---|---|---|---|---|---|---|---|
| *The DC resistance and the resistance increase rate were relative values relative to those of Comparative Example 1 defined as 100. | | | | | | | |

### <Discussion>

As shown in Table 1 and FIG. 5, the DC resistance of the battery decreased with decreasing total pore volume ratio. It is inferred that the adhesiveness between the coated active material and the sulfide solid electrolyte was improved and the resistance of the battery was reduced because the LTAF particles were more reliably adhered to the NCA particles and a fine structure was formed more appropriately with increasing processing time.

The DC resistance was minimum when the total pore volume ratio was 2.4. Example 2, Example 3, and Example 6 whose total pore volume ratios were smaller than the total pore volume ratio of Example 5 showed a DC resistance higher than that of Example 5. That is, a tendency for the DC resistance to be reduced with decreasing total pore volume ratio was observed. It is inferred that when the total pore volume ratio sufficiently decreased, the surface of the particle of the coated active material was sufficiently smooth and therefore a joining condition between the coated active material and other materials, such as the sulfide solid electrolyte and the binder, deteriorated. Note that the battery of Example 3 whose total pore volume ratio was 1.2 also showed sufficiently low DC resistance and resistance increase rate.

As shown in Table 1 and FIG. 6, in a region where the total pore volume ratio (the horizontal axis) is between 7.2 and 1.6, the resistance increase rate decreased with decreasing total pore volume ratio. This result indicates that the lower the total pore volume ratio is, the fewer the LTAF particles not joined to the active material are. In this case, it is possible to avoid a decrease in substantial coating amount as a result of delamination of the LTAF particles during manufacturing of an electrode plate. Avoiding such a decrease is thought to affect reduction of an increase in resistance, the reduction being a measure of the durability of a battery. On the other hand, as for a region where the total pore volume ratio is lower than 1.6, it is thought that deterioration of the joining condition due to smoothing of the surface became apparent, delamination at the interface between the coated active material and other materials in the durability test proceeded, and consequently the resistance increase rate increased.

### INDUSTRIAL APPLICABILITY

The technique of the present disclosure is useful, for example, for all-solid-state lithium secondary batteries.

## Claims

1. A coated active material comprising:
an active material; and
a coating layer comprising a first solid electrolyte and coating at least a portion of a surface of the active material, wherein
the first solid electrolyte comprises a fluoride, and
a ratio of a total pore volume of the coated active material to a total pore volume of the active material is 1.2 or more and less than 7.2.

2. A coated active material comprising:
an active material; and
a coating layer comprising a first solid electrolyte and coating at least a portion of a surface of the active material, wherein
the first solid electrolyte comprises a fluoride,
a total pore volume of the coated active material is 0.001 cm³/g or more and less than 0.014 cm³/g, and
a median size of the coated active material is 3.5 µm or more and 5.5 µm or less.

3. The coated active material according to claim 1 or 2, wherein the coating layer has a particle-like structure comprising a plurality of particles having a diameter of 500 nm or less.

4. The coated active material according to claim 1 or 2, wherein the coating layer has a plurality of voids having a diameter of 50 nm or less.

5. The coated active material according to claim 1 or 2, wherein a mass of the coating layer is 4.5% or less of a mass of the coated active material.

6. The coated active material according to claim 1 or 2, wherein the active material is a positive electrode active material.

7. The coated active material according to claim 1 or 2, wherein
the first solid electrolyte is represented by the following composition formula (2):
Li₆₋ₙₓMₓX₆ Formula (2), where x satisfies 0 < x ≤ 1.2, M is a metal or a metalloid, n is a weighted average valence of an element or elements included in the M, and X comprises fluorine or comprises fluorine and chlorine.

8. The coated active material according to claim 7, wherein the M is at least one selected from the group consisting of Ca, Mg, Al, Y, Ti, and Zr.

9. The coated active material according to claim 7, wherein the M is at least one selected from the group consisting of Al, Ti, and Zr.

10. The coated active material according to claim 7, wherein the M is at least one selected from the group consisting of Ti and Al.

11. The coated active material according to claim 7, wherein a ratio of an amount of substance of Li to a total amount of substance of the M is 1.7 or more and 4.2 or less.

12. An electrode material comprising:
the coated active material according to claim 1 or 2; and
a second solid electrolyte.

13. The electrode material according to claim 12, wherein the second solid electrolyte comprises a sulfide solid electrolyte.

14. A battery comprising a positive electrode comprising the electrode material according to claim 12.

15. A battery comprising:
a positive electrode comprising the electrode material according to claim 12;
a negative electrode; and
an electrolyte layer disposed between the positive electrode and the negative electrode.
